# EUROPEAN PATENT APPLICATION

(11) **EP 4 756 580 A1**
(43) Date of publication of application: **10.06.2026**
(21) Application number: 25205683.3
(22) Date of filing: 30.09.2025
(51) Int. Cl.: G06F 3/01, G06F 3/04815, G06F 3/04842

(54) **METHOD, APPARATUS, DEVICE AND STORAGE MEDIUM FOR INTERACTION**

(30) Priority: 06.12.2024 CN 202411793593
(71) Applicant: Beijing Zitiao Network Technology Co., Ltd., Beijing 100190 (CN)
(72) Inventor: Liu, Mengqian, Beijing, 100028 (CN); Guo, Jia, Beijing, 100028 (CN); Tao, Xujie, Beijing, 100028 (CN); Liu, Shuo, Beijing, 100028 (CN)
(74) Representative: Grünecker Patent- und Rechtsanwälte PartG mbB

(57) **Abstract**

The embodiments of the disclosure provide a method, an apparatus, a device and a storage medium for interaction. The method includes: acquiring, in response to receiving an interaction request from a user, interaction content comprising at least image content through a content acquisition device; performing object detection on the image content to obtain an object detection result indicating at least one object in the image content; determining, based on the object detection result, a target object classified as a point of interest from the at least one object and an interaction requirement for the target object; and performing a target operation related to the target object based on the interaction requirement.

## Description

### FIELD

The example embodiments of the present disclosure generally relate to the field of computers, and in particular, to methods, apparatuses, devices, computer-readable storage media, and computer program products for interaction.

### BACKGROUND

With the development of artificial intelligence technology, various types of product forms have emerged as the times require. For example, human-computer interaction with an artificial intelligence product (for example, a digital assistant) may be performed through speech or text, which provides users with many conveniences. However, the performance of traditional digital assistants in image-based human-computer interaction still needs to be improved.

### SUMMARY

In a first aspect of the present disclosure, a method for interaction is provided. The method comprises: acquiring, in response to receiving an interaction request from a user, interaction content comprising at least image content through a content acquisition device; performing object detection on the image content to obtain an object detection result indicating at least one object in the image content; determining, based on the object detection result, a target object classified as a point of interest from the at least one object and an interaction requirement for the target object; and performing a target operation related to the target object based on the interaction requirement.

In a second aspect of the present disclosure, an apparatus for interaction is provided. The apparatus comprises: an acquiring module configured to acquire, in response to receiving an interaction request from a user, interaction content comprising at least image content through a content acquisition device; an obtaining module configured to perform object detection on the image content to obtain an object detection result, the object detection result indicating at least one object in the image content; a determining module configured to determine, based on the object detection result, a target object classified as a point of interest from the at least one object and an interaction requirement for the target object; and a performing module configured to perform a target operation related to the target object based on the interaction requirement.

In a third aspect of the present disclosure, an electronic device is provided. The device comprises: at least one processor; and at least one memory coupled to the at least one processor and storing instructions for execution by the at least one processor, the instructions, when executed by the at least one processor, causing the device to perform the method of the first aspect.

In a fourth aspect of the present disclosure, a computer-readable storage medium is provided. The computer-readable storage medium has stored thereon a computer program executable by a processor to implement the method of the first aspect.

In a fifth aspect of the present disclosure, a computer program product is provided. The computer program comprises a computer program, wherein the computer program, when executed by a processor, implements the method of the first aspect.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments according to the present disclosure may be implemented;
FIG. 2 shows a flowchart of a process of interaction according to some embodiments of the present disclosure;
FIGs 3A-3F show schematic diagrams of examples of image content according to some embodiments of the present disclosure;
FIG. 4 illustrates a schematic diagram of an example architecture for interaction according to some embodiments of the present disclosure;
FIG. 5 illustrates a schematic diagram of an example architecture for interaction according to some embodiments of the present disclosure;
FIG. 6 illustrates a schematic structural block diagram of an example apparatus for interaction according to some embodiments of the present disclosure; and
FIG. 7 illustrates a block diagram of an electronic device capable of implementing various embodiments of the present disclosure.

### DETAILED DESCRIPTION

The embodiments of the present disclosure will be described in more detail with reference to the accompanying drawings. Although some embodiments of the present disclosure have been illustrated in the drawings, it should be understood that the present disclosure can be implemented in various manners, and thus should not be construed to be limited to embodiments disclosed herein. On the contrary, those embodiments are provided for the thorough and complete understanding of the present disclosure. It should be understood that the drawings and embodiments of the present disclosure are only used for illustration, rather than limiting the protection scope of the present disclosure.

In the description of the embodiments of the present disclosure, the terms "comprise" and its variants are to be read as open terms that mean "include, but is not limited to". The term "based on" is to be read as "based at least in part on". The term "an embodiment" and "the embodiment" is to be read as "at least one embodiment". The term "some embodiments" is to be read as "at least some embodiments". Other definitions, explicit and implicit, might be included below.

Herein, unless explicitly stated, performing one step "responding to A" does not imply that this step is performed immediately after "A", but may include one or more intermediate steps.

It should be understood that the data involved in the technical solution (including but not limited to the data itself, the obtaining, using, storing or deleting of the data) should follow the requirements of the corresponding laws and regulations and related regulations.

It will be appreciated that before using the technical solution disclosed in each embodiment of the present disclosure, users should be informed of the type, the scope of use, the use scenario, etc. of the personal information involved in the present disclosure in an appropriate manner in accordance with relevant laws and regulations, and the user's authorization should be obtained.

For example, in response to receiving an active request from a user, prompt information is sent to the user to explicitly prompt the user that the operation requested by the user will need to obtain and use the user's personal information. Thus, related users may autonomously select whether to provide personal information to the software or the hardware such as an electronic device, an application, a server or a storage medium that perform the operation of the technical solution of the present disclosure according to the prompt information.

As an optional but non-restrictive implementation, in response to receiving an active request from a user, the way of sending prompt information to the user may be, for example, a pop-up window in which prompt information may be presented in text. In addition, pop-up windows may also contain selection controls for users to choose "agree" or "disagree" to provide personal information to electronic devices.

It will be appreciated that the above notification and acquisition of user authorization process are only schematic and do not limit the implementations of the present disclosure. Other methods that meet relevant laws and regulations may also be applied to the implementation of the present disclosure.

As used herein, the term "model" may learn an association relationship between respective inputs and outputs from training data, such that a corresponding output may be generated for a given input after training is complete. The generation of the model may be based on machine learning techniques. Deep learning is a machine learning algorithm that processes inputs and provides corresponding outputs by using a multi-layer processing unit. The neural network model is one example of a deep learning-based model. As used herein, a "model" may also be referred to as a "machine learning model," a "learning model," a "machine learning network," or a "learning network," which terms are used interchangeably herein.

A "neural network" is a deep learning-based machine learning network. The neural network is capable of processing inputs and providing respective outputs, which typically include an input layer and an output layer and one or more hidden layers between the input layer and the output layer. Neural networks used in deep learning applications typically include many hidden layers, thus increasing the depth of the network. Each layer of the neural network is connected in sequence, such that the output of the previous layer is provided as an input to the next layer. In this case, the input layer receives the input of the neural network, and the output of the output layer serves as the final output of the neural network. Each layer of the neural network includes one or more nodes (also referred to as processing nodes or neurons), and each node processes input from the previous layer.

Generally, machine learning may generally include three phases, i.e., a training phase, a testing phase, and an application phase (also referred to as an inference phase). At the training phase, a given model may be trained using a large amount of training data, constantly updating the parameter values iteratively until the model is able to obtain consistent inferences from the training data that satisfy the expected objectives. By training, the model may be considered to be able to learn from the training data an association from input to output (also referred to as mapping of input to output). The parameter values of the trained model are determined. In the testing phase, the test input is applied to the trained model to test that whether the model can provide correct output, thereby determining the performance of the model. In the application phase, the model may be used to process the actual input based on the parameter value obtained by training to determine a corresponding output.

As mentioned above, with the development of artificial intelligence technology, various types of product forms have emerged as the times require. For example, some artificial intelligence products (for example, a digital assistant) may provide human-computer interaction with the user. The user may ask questions to the digital assistant through speech, text or the like, and the digital assistant may produce answers by invoking the machine learning model, which provides users with many conveniences. However, these traditional artificial intelligence products still have relatively poor reasoning ability and accuracy for images, resulting in the performance of these products in image-based human-computer interaction still needs to be improved.

In view of this, the embodiments of the present disclosure provide an improved solution for interaction. In this solution, if an interaction request is received from a user, interaction content comprising at least image content may be acquired through a content acquisition device. The object detection is performed on the image content to obtain an object detection result indicating at least one object in the image content. Based on the object detection result, a target object classified as a point of interest (POI) from the at least one object and an interaction requirement for the target object are determined. Then, a target operation related to the target object is performed based on the interaction requirement.

In this way, the embodiments of the present disclosure can accurately recognize the POI of the user on the image content, accurately determine the interaction requirement of the user for the POI. The interaction request of the user can be responded based on the interaction requirement, which can improve the accuracy and interaction quality of human-computer interaction based on the image.

Various example implementations of this solution are described in detail below in conjunction with the accompanying drawings.

### Example Environment

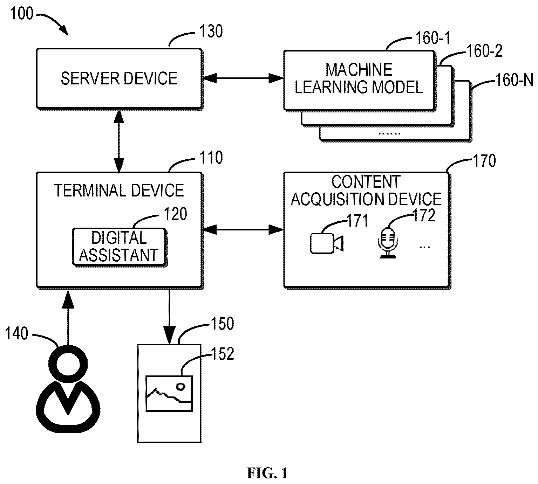

FIG. 1 illustrates a schematic diagram of an example environment 100 in which embodiments of the present disclosure can be implemented. In this example environment 100, an application is installed in the terminal device 110. The user 140 may interact with the application via the terminal device 110 and/or an attachment device of the terminal device 110.

In embodiments of the present disclosure, an application may provide a digital assistant 120 to assist the user 140 in processing task. The digital assistant 120 may have intelligent dialogue and task processing capabilities. In some examples, the digital assistant 120 can receive interaction content of the user 140, and perform tasks and provide replies based on the inference capabilities. For example, the digital assistant 120 may support a text dialogue service, a speech dialogue service, an image dialogue service, and content dialogue under other modalities with the user 140.

In some embodiments, the digital assistant 120 may acquire the interaction content of the user 140 through the content acquisition device 170. In some examples, the content acquisition device 170 may include an image acquisition unit 171 (e.g., a camera, a webcam, a scanner, etc.) and a speech acquisition unit 172 (e.g., a microphone). The digital assistant 120 may acquire the image content through the image acquisition unit 171, and may acquire the speech content of the user 140 through the speech acquisition unit 172. The content acquisition device 170 may be deployed in the terminal device 110, or may be separated from the terminal device 110. The content acquisition device 170 is not limited to including the image acquisition unit 171 and the speech acquisition unit 172. The content acquisition device 170 may further include another device, which is not limited in the embodiments of the present disclosure.

In some embodiments, the digital assistant 120 may utilize a machine learning model 160 (which may include one or more machine learning models, such as a machine learning model 160-1, a machine learning model 160-2,..., a machine learning model 160-N, and the like, wherein N is positive integer, and for ease of description, one or more machine learning models are collectively referred to herein as machine learning models160) to support the interaction with the user 140. For example, the digital assistant may utilize one or more machine learning models 160 to provide a question and answer service to the user 140.

In environment 100, if the application is in an active state, the terminal device 110 may present user interface 150 of the application. The user interface 150 may include various types of interfaces that the application can provide, such as an interaction interface between a user and the digital assistant 120. In some embodiments, the terminal device 110 may present interaction content 152 (including speech content, text content, image content, etc.) of the user 140 with the digital assistant 120 in the user interface 150.

The machine learning model 160 may of different types. In some embodiments, the one or more machine learning models 160 may be constructed based on a language model (LM). The used machine learning model is a content generative model capable of generating corresponding outputs based on model inputs. In some embodiments, the language model-based machine learning model may receive model inputs in the form of text (e.g., natural language and/or machine language) and/or model inputs in the form of non-text (e.g., images, speech, video, etc.), and can generate the desired output from the model inputs and the prompts. Here, the prompt is used to guide the machine learning model to generate the user requirement indicated by the model input. In an application scenario for supporting a user dialogue, the input of the user 140 may be provided to the machine learning model 160 as at least a portion of the model input (other portions may include prompts). This user input is considered a question. Based on the model output, a corresponding reply may be generated to provide to the user 140.

In some embodiments, the terminal device 110 communicates with the server device 130 to implement the provision of service of the application. As shown in FIG. 1, the server device 130 may invoke the machine learning model 160 to support the human-machine dialogue function between the digital assistant 120 and the user 140 based on the output of the machine learning model 160. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 can also support any type of interface for a user (such as a "wearable" circuit, etc.). The server device 130 may be various types of computing systems/servers capable of providing computing power, including, but not limited to, mainframes, edge computing nodes, computing devices in a cloud environment, and the like. The server device 130 may be implemented, for example, based on a cloud environment.

It should be understood that the structures and functions of the various elements in the environment 100 are described for illustrative purpose only and do not imply any limitation to the scope of the present disclosure.

Some example embodiments of the present disclosure will be described below with continued reference to the accompanying drawings.

### Example Processes

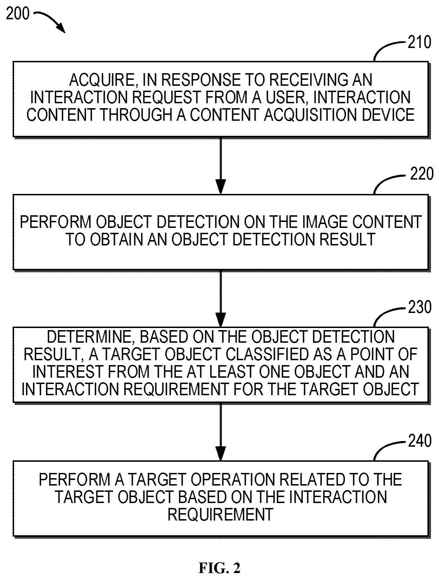

FIG. 2 shows a flowchart of a process 200 for interaction according to some embodiments of the present disclosure. For convenience of discussion, some embodiments of the present disclosure will be described below in conjunction with environment 100 in FIG. 1 and from the perspective of terminal device 110, but this is merely illustrative. In some embodiments, the actions described with respect to the terminal device may be completed by the terminal device in coordination with the server device.

At block 210 of the process 200, if the terminal device 110 receives an interaction request from the user 140 to the digital assistant 120, the interaction content is acquired by the content acquisition device 170. The interaction request is used to request the digital assistant 120 to perform human-computer interaction. In some examples, the terminal device 110 may present an icon of the digital assistant 120. The user may trigger (e.g., click, press, slide, etc.) the icon of the digital assistant 120. In response to detecting a trigger on the icon of the digital assistant 120, the terminal device 110 may determine an interaction request to the digital assistant 120 is received. In other examples, the user may also wake up the digital assistant 120 by speech instructions. The terminal device 110 may be configured to continuously detect speech in an environment in which the terminal device 110 is located. If it is determined that the audio captured from the environment contains speech, it is detected whether the speech contains a wake-up word for waking up the digital assistant 120. If it is determined that the speech contains a wake-up word, the terminal device 110 may determine that an interaction request for the digital assistant 120 is received.

The interaction content includes at least image content. In some embodiments, the content acquisition device 170 may include an image acquisition unit 171 (e.g., a camera, a webcam, or a scanner, etc.). If an interaction request for a digital assistant is received, the terminal device 110 may control the image acquisition unit 171 to acquire image content. In some embodiments, the interaction content may further include speech content. The content acquisition device 170 may further include a speech acquisition unit 172 (for example, a microphone). The terminal device 110 may control the image acquisition unit 171 and the speech acquisition unit 172 to separately acquire the image content and the speech content in response to receiving the interaction request for the digital assistant.

The content acquisition device 170 may be a component of the terminal device 110, or may be separated from the terminal device 110. In an example, the content acquisition device 170 may include a camera and a microphone deployed on the terminal device 110. In another example, the content acquisition device 170 may also be deployed on an electronic device (for example, glasses, earphones, etc.) communicatively connected to the terminal device 110. For example, the electronic device may be provided with a camera and a microphone, and the terminal device may be in communication connection with the electronic device (for example, by using a Bluetooth connection). If an interaction request of the user for the digital assistant 120 is received, the terminal device 110 may send an instruction to the electronic device through a communication connection with the electronic device, to instruct the electronic device to start the camera and the microphone to acquire the image content and the speech content, and receive the image content and the speech content from the electronic device.

It should be noted that the interaction content is not limited to image content and speech content, but may also include interaction content of other modalities such as text content. Correspondingly, the content acquisition device 170 is not limited to include the image acquisition unit 171 and the speech acquisition unit 172, but may include acquisition units for acquiring interaction content of other modalities. The types of the interaction content and the content acquisition device 170 are not limited in the embodiments of the present disclosure.

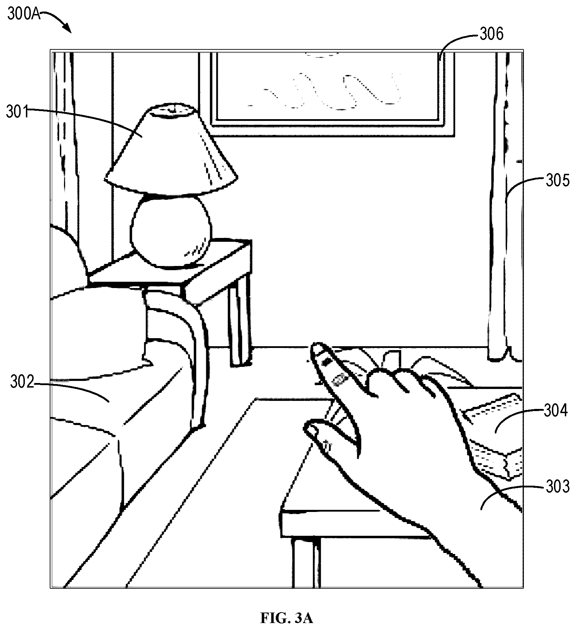

At block 220 of the process 200, the terminal device 110 performs object detection on the image content to obtain an object detection result. The object detection result indicates at least one object in the image content. In general, various entities and regions in image content may be recognized as objects. Therefore, the at least one object may include various entities or regions in the image content that can be recognized. An example is shown in FIG. 3A, which is a schematic diagram of an example 300A of image content according to some embodiments of the present disclosure. The table lamp 302, couch 302, hand 303, book 304, curtain 305, drawing 306, or the like in the image content shown in example 300A may all be recognized as objects.

In some embodiments, the object detection result may include at least one of: a position of the at least one object in the image content, or a class of the at least one object. In some examples, the object detection result may include an object number, an object mask, and a class label. The object mask may indicate a contour and a region of the object. The class label indicates a class of the object. The class label may be a label selected from a set of pre-constructed class labels, or may be a label determined based on the interaction content. Alternatively or additionally, the object detection result may further include a bounding box, which also indicates a contour and a region of the object.

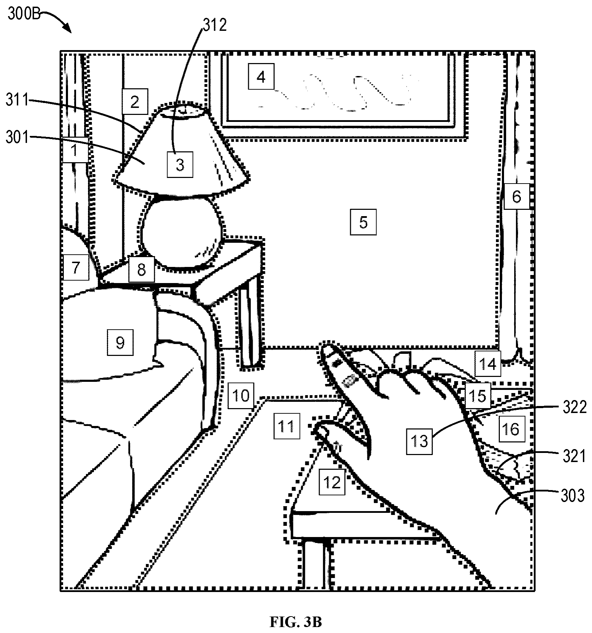

As an example, as shown in FIG. 3A and FIG. 3B, example 300B shows a segmentation manner of the plurality of objects of image content in example 300A. The table lamp 301 is recognized as an object in example 300B. The object detection result may include a bounding box 311, an object number 312 (i.e., "3"), an object mask (not shown), and a class label (not shown) of the table lamp 301. The hand 303 is also recognized as an object, and the object detection result further includes a bounding box 321 (i.e., "13"), an object number 322, an object mask, and a class label of the hand 303. It may be understood that, in fact, the object detection result may include an object number, a bounding box, an object mask, and a class label of each object recognized from the image content shown in example 300A, which are not enumerated herein. It should also be noted that example 300B is merely an example given for illustrating the solutions of the embodiments of the present disclosure. In practical applications, the objects in the image content may be segmented and indicated in any suitable manner, which is not limited to the embodiments of the present disclosure.

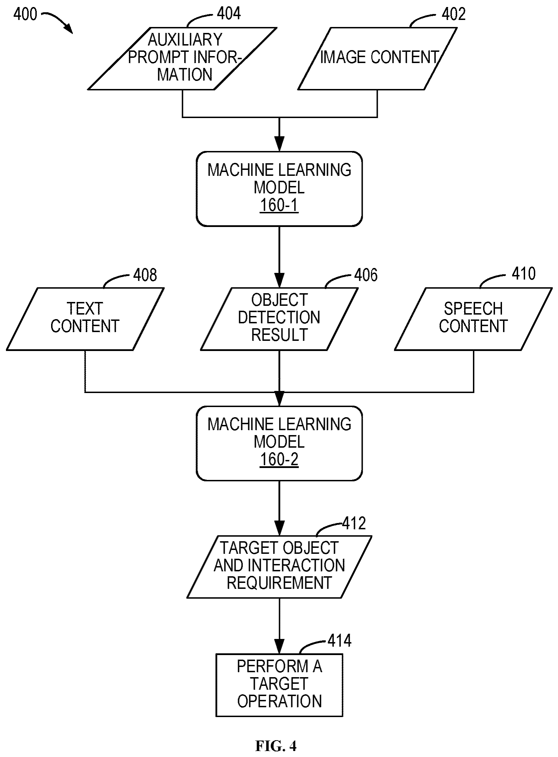

In some embodiments, the terminal device 110 may perform object detection on the image content by using the trained machine learning model to obtain an object detection result of the image content. An example is shown in FIG. 4, which is a schematic diagram of an example architecture 400 for user interaction according to some embodiments of the present disclosure. The example architecture 400 illustrates a machine learning model 160-1 (also sometimes referred to herein as a first machine learning model). The terminal device 110 may generate model input for the machine learning model 160-1 based on the image content 402. The terminal device 110 may provide the model input to the machine learning model 160-1, and obtain model output generated by the machine learning model 160-1 based on the model input. The terminal device 110 may obtain the object detection result 406 based on the model output. The object in the image content can be efficiently and accurately recognized through the machine learning model 160-1.

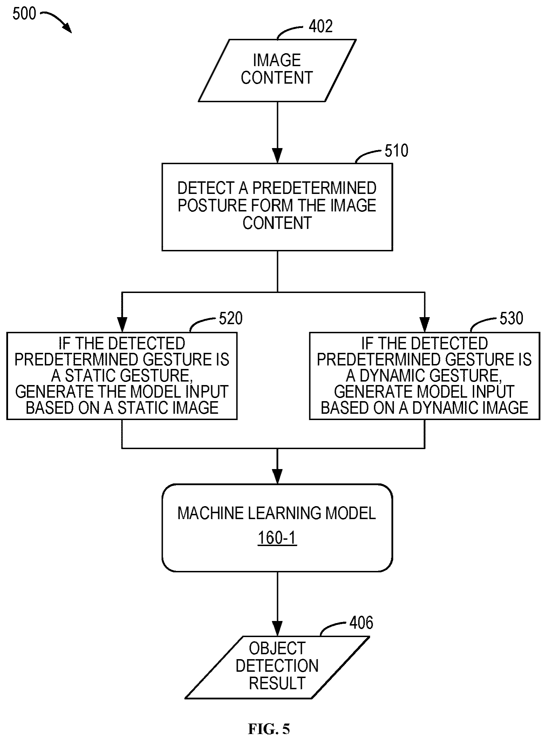

There are some examples shown in FIG. 5, which is a schematic diagram of an example architecture 500 for user interaction according to some embodiments of the present disclosure. At block 510, the terminal device 110 detects a predetermined posture formed by a guiding object with guidance from the image content 402. The guiding object (which may also be referred to as an interactor) may form a predetermined posture with guidance, and may indicate an object in the space through a predetermined posture with guidance. The guiding object may include, but is not limited to, a hand, an eye, a pointing stick, a cursor on the display screen or a light spot formed by a laser pen, and the like. The predetermined posture may include various postures with guidance formed by the guiding object. For example, the guiding object may include a hand of the user, and the predetermined posture may include a gesture with guidance.

At block 520, if the detected predetermined gesture is a static gesture, the terminal device 110 may generate the model input for the machine learning model 160-1 based on a static image in the image content. At block 520, if the detected predetermined gesture is a dynamic gesture, the terminal device 110 may generate the model input for the machine learning model 160-1 based on a dynamic image in the image content. Thereafter, the terminal device 110 provides the model input to the machine learning model 160-1, and obtains the object detection result 406 based on the model output of the machine learning model 160-1. In this way, the machine learning model 160-1 can recognize a complete predetermined posture. Thus, each object in the image content may be segmented based on the complete predetermined posture, which is beneficial to improving the accuracy of object detection.

In some embodiments, as shown in FIG. 4, the terminal device 110 may also generate the model input for the machine learning model 160-1 based on the image content 402 and auxiliary prompt information 404 for the image content 402. The auxiliary prompt information 404 is used to assist the machine learning model 160-1 to understand the object in the image content. Further, the auxiliary prompt information 404 may assist the machine learning model 160-1 in detecting the object in the image content. In such a way, the accuracy of object detection is improved.

In some examples, the auxiliary prompt information 404 may include historical interaction data. The historical interaction data can improve semantic integrity, can assist the machine learning model 160-1 in detecting objects in the image content 402, and is beneficial to improving accuracy of object detection.

In other examples, the interaction content may further include text content and/or speech content. The auxiliary prompt information 404 may include text content and/or speech content in the interaction content. When the auxiliary prompt information 404 includes the speech content in the interaction content, the terminal device 110 may perform text recognition on the speech content to obtain a text prompt corresponding to the speech content. The text content and the speech content in the interaction content of the user are usually related to the image content, and can assist the machine learning model 160-1 to understand the objects in the image content 402, thus is beneficial to improve object detection.

In still other examples, the auxiliary prompt information may further include an image prompt. For example, the image prompt may include images of one or more particular objects. Through such an image prompt, the machine learning model 160-1 may be guided to detect objects that are the same as or similar to the one or more particular objects from the image content. Also for example, the image prompt may include one or more prompt images and object detection results of the one or more prompt images. In this way, the machine learning model 160-1 may be guided to perform object segmentation on the image content 402 in a similar object segmentation manner.

At block 230 of the process 200, the terminal device 110 determines, based on the object detection result, a target object classified as a point of interest from the at least one object and an interaction requirement for the target object. The POI may be considered as an object of interest to the user in the image content, or may be understood as an object related to the interaction. The interaction requirement is used to indicate a desire or requirement for the user to interact with the digital assistant 120. For example, the interaction requirement may indicate a reply related to the POI that the user expects the digital assistant 120 to feed back, or indicate an operation related to the POI that the user expects the digital assistant 120 to perform, and the like.

In some examples, as shown in FIG. 4, the terminal device 110 may generate a model input (i.e., a second model input) for the machine learning model 160-2 (also sometimes referred to herein as a second machine learning model) based on the object detection result 406. The terminal device 110 may provide the model input to the trained machine learning model 160-2 to obtain the model output (i.e., the second model output) generated by the machine learning model 160-2. Then, the terminal device 110 may determine the target object and the interaction requirement 412 based on the model output of the machine learning model 160-2. The POI and interaction requirements can be efficiently and accurately determined through the machine learning model 160-2.

In some embodiments, the terminal device 110 may determine the relative position and the association relationship between the at least one object based on the object segmentation result. Then, the terminal device 110 may determine the target object and the interaction requirement based on the relative position and the association relationship between at least one object. As an example, the terminal device 110 may generate model input of the machine learning model 160-2 based on the prompt, the object mask and the class label. The prompt may indicate the machine learning model 160-2 to analyze relative positions and association relationships between the plurality of objects in the image content based on the object mask and the class label. For example, the prompts may indicate the machine learning model 160 to analyze a relative distance, spatial arrangement, relative direction, interaction relationship, or the like between the plurality of objects. The prompt may further indicate the machine learning model 160-2 to output the POI and the interaction requirement of the user based on the analysis result. The terminal device 110 may determine, based on the model output of the machine learning model 160-2, a target object classified as an POI and an interaction requirement for the POI.

In some embodiments, the interaction content further includes speech content and/or text content of the user. The terminal device 110 may determine, based on the object detection result, an object associated with the speech content and/or the text content from the at least one object to form the target object. As an example, as shown in FIG. 4, the terminal device 110 may obtain the text content 408 and/or the speech content 410 in the interaction content. Based on the object detection result 406, the text content 408, and/or the speech content 410 and the prompt, a model input for the machine learning model 160-2 is generated. The prompt may indicate the machine learning model 160-2 to analyze the relative positions and the association relationships between the plurality of objects in the image content based on the object mask, the class label, the text content 408, and/or the speech content 410 in the object detection result 406, and further determine the POI and the interaction requirement based on the analysis result. Then, the terminal device 110 may determine, based on the model output of the machine learning model 160-2, the target object classified as the POI and the interaction requirement. As another example, the terminal device 110 may also generate the model input of the machine learning model 160-2 based on the object detection result 406, the text content 408, and/or the speech content 410, the historical interaction content, and the prompt. Therefore, the semantic integrity is improved, and the accuracy of the POI and the interaction requirement can be improved.

In some embodiments, the at least one object may include a plurality of objects. The terminal device 110 may determine a guiding object with guidance from the plurality of objects based on the object detection result. The object indicated by the guiding object among the plurality of objects is determined as the target object. As noted in the foregoing analysis, the guiding object may include, but is not limited to, a hand, an eye, a pointing stick, a cursor on a display screen, or a light spot formed by or a laser pen, or the like. In some examples, the terminal device 110 may determine the guiding object and the indication direction of the guiding object based on the object mask and the class label. The object corresponding to the indication direction among the plurality of objects is determined as the target object. In this way, the interaction manner supported by the digital assistant 120 can be enriched, so that the user is not limited to interacting with the digital assistant 120 only through text or speech, but also can interact with the digital assistant 120 through for example a body action or an indicating tool, which can improve the flexibility and diversity of interaction with the digital assistant 120.

In some embodiments, the terminal device 110 determines at least one predetermined posture formed by the guiding object based on the object detection result. An object of the plurality of objects associated with the at least one predetermined posture is determined as the target object. The predetermined posture may include various postures with guidance that the guiding object can form. In practical applications, some predetermined postures that the guiding object can form are predetermined. A set of predetermined postures is constructed based on these predetermined postures. The terminal device 110 may determine, based on the object detection result, whether the guiding object forms a posture in the set of predetermined postures. In this way, consistency of interaction manner is maintained.

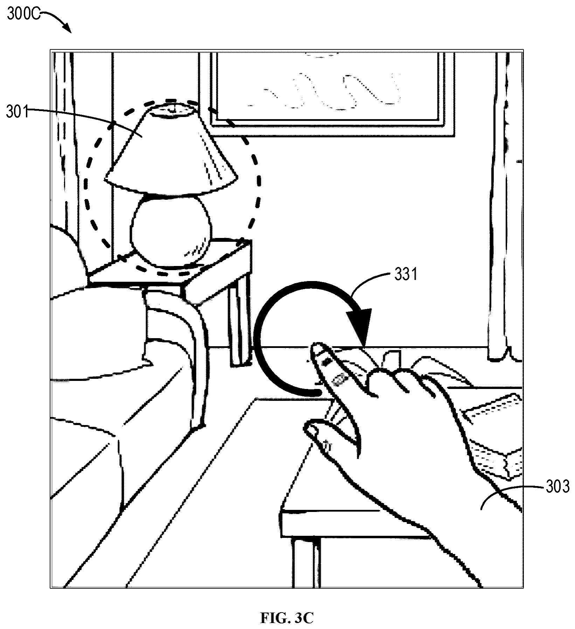

As an example, FIG. 3C shows a schematic diagram of an example 300C of image content according to some embodiments of the present disclosure. For the image content shown in example 300C, the terminal device 110 may determine the hand 303 in the image content as the guiding object. Assume that the user's hand 303 forms a circling gesture 331 (i.e., a predetermined posture). The terminal device 110 may determine the target object based on the indication direction of the hand 303 and the range of the circling gesture 331. For example, the table lamp 301 located in the indication direction of the hand 303 and corresponding to the selected range of the circling gesture 331 may be determined as the target object.

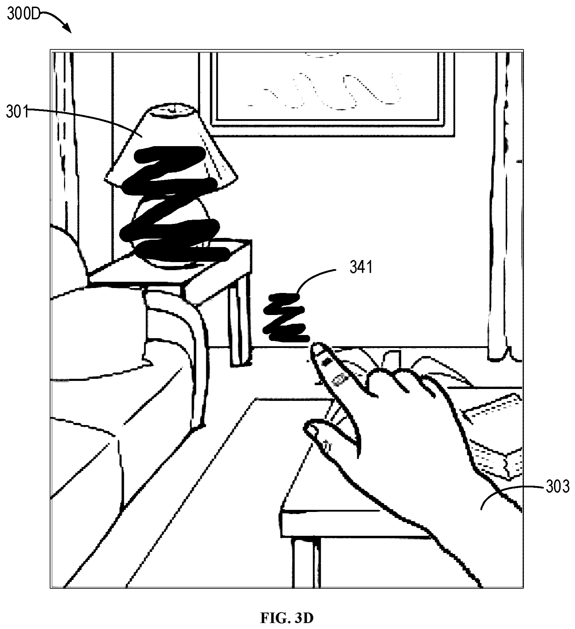

As another example, FIG. 3D shows a schematic diagram of an example 300D of image content according to some embodiments of the present disclosure. In example 300D, the user's hand 303 forms an smearing gesture 341 that belongs to a posture in the set of predetermined postures. The terminal device 110 may determine the table lamp 301 for example as the target object based on the indication direction of the hand 303 and the range of the smearing gesture 341.

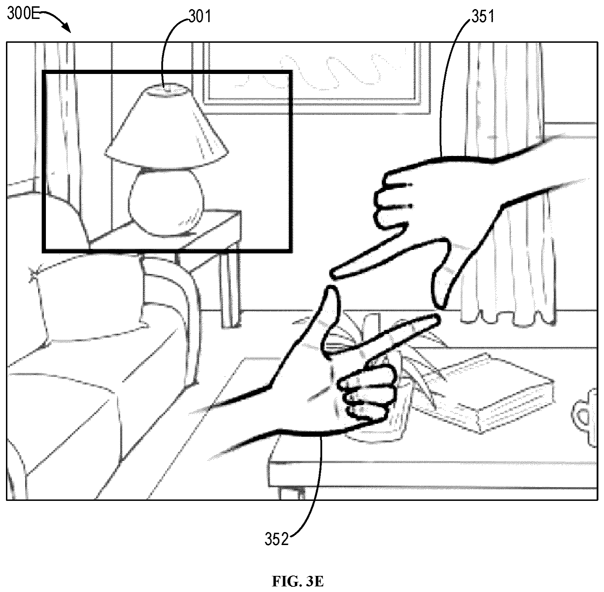

As yet another example, FIG. 3E shows a schematic diagram of an example 300E of image content according to some embodiments of the present disclosure. For the image content shown in example 300D, the terminal device 110 may determine the user's hands 351, 352 as guiding objects. The user's hands 351, 352 form a bounding gesture that belongs to a posture in a set of predetermined postures. The terminal device 110 may determine, for example, the table lamp 301 as the target object based on the indication direction and the range of the bounding gesture.

It should be noted that, although the above example takes the hand of the user as a guiding object to explain the embodiments of the present disclosure, the guiding object is not limited to a hand. Appropriate objects with guidance may be selected as guiding objects based on actual needs. In addition, the predetermined posture is not limited to the above posture, and any suitable predetermined posture may be configured based on the selected guiding object. The type of the guiding object and the type of the predetermined posture are not limited in the embodiments of the present disclosure.

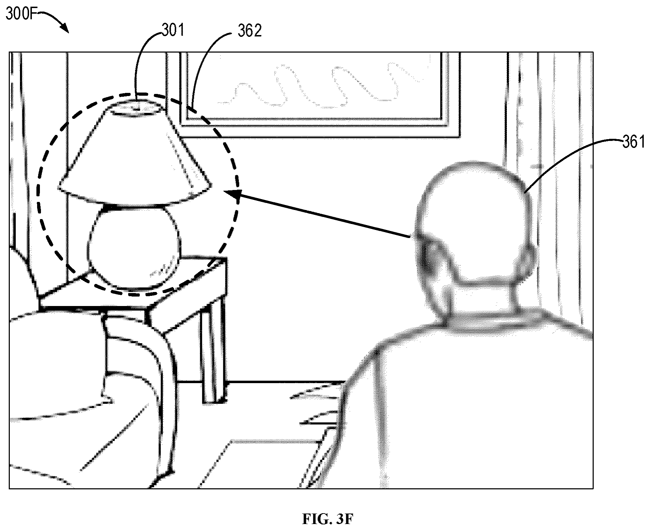

In some embodiments, the terminal device 110 may determine a gaze region gazed by the user in the image content, and determine the target object based on one or more objects located in the gaze region. As an example, FIG. 3F shows a schematic diagram of an example 300F of image content according to some embodiments of the present disclosure. The image content shown in example 300F includes a user image 361. The terminal device 110 may determine the posture information of the user (for example, information indicating the posture of the user' head) based on the user image 361. The terminal device 110 may determine a gaze region 362 gazed by the user in the image content based on the posture information of the user, and determine the table lamp 301 located in the gaze region 362 as the target object. In this way, the interaction and visual detection based on the image content between the user and the digital assistant 120 can further improve the flexibility and diversity of interaction.

In some embodiments, based on at least one of the configuration information of the content acquisition device 170, the posture information of the content acquisition device 170, or the eye movement information of the user, the terminal device 110 may determine a gaze region gazed by the user in the image content. The configuration information herein may include various device information related to determining the gaze region. For example, the content acquisition device 170 may include a device type, an internal and external parameter of the image acquisition unit 171, and the like. The posture information can indicate a position and a posture of the content acquisition device 170 in space. For example, the posture information may include a pitch angle, a roll angle, or a yaw angle of the camera. With the configuration information, the posture information and the eye movement information, the gaze region gazed by the user in the image content can be accurately determined, and then the POI and the interaction requirement can be accurately determined.

As an example, the content acquisition device 170 may include glasses. The glasses may be provided with a camera thereon. The configuration information may include type information about the glasses, internal and external parameters of the camera, and the like. The terminal device 110 may generate the model input of the machine learning model 160-2 based on the prompt, the configuration information, the object mask, and the class label. The prompt may instruct the machine learning model 160-2 to analyze the relative positional relationship between the plurality of objects and the relative positional relationship between the user's eyes and the camera. The prompt may further instruct the machine learning model 160-2 to determine, based on a relative positional relationship between the plurality of objects and a relative positional relationship between the eyes and the camera, a gaze region in the image that is gazed by the eyes of the user, and then determine the target object based on the one or more objects located in the gaze region.

As another example, the content acquisition device 170 may include glasses. A camera and an eye movement tracker can be deployed on the glasses. Image content of an environment may be acquired through the camera, and eye movement tracking data of eyes of a user is acquired through the eye movement tracker. The terminal device 110 may generate a model input of the machine learning model 160-2 based on the eye movement tracking data and the object detection result, and determine one or more gaze points (which may also be gaze regions) that are gazed by the user in the image content by using the machine learning model 160-2. The terminal device 110 may determine the target object based on one or more objects corresponding to the one or more gaze points.

As yet another example, the content acquisition device 170 may include a pair of wireless earphones. A camera and a posture sensor may be deployed on the wireless earphones. The image content may be acquired through the camera, and the posture information of the wireless earphones may be acquired through the posture sensor. The terminal device 110 may obtain configuration information of the wireless earphones (for example, information indicating a configuration position of the wireless earphones, internal and external parameters of the camera, etc.), posture information, and acquired image content. A model input of the machine learning model 160-2 is generated based on the configuration information, the posture information and the object detection result. The machine learning model 160-2 is instructed to analyze a relative positional relationship between eyes of the user and the camera based on the configuration information and the posture information, and a relative positional relationship between the plurality of objects. Then, a model output including the POI and the interaction requirement is output based on the relative positional relationship between the eyes and the camera and the relative positional relationship between the plurality of objects. The terminal device 110 may determine, based on the model output, a target object classified as a POI and an interaction requirement for the POI.

At block 240 of the process 200, the terminal device 110 performs a target operation related to the target object based on the interaction requirement by using the digital assistant 120. In some embodiments, the terminal device 110 may determine at least one predetermined instruction indicating the interaction requirement, and then perform the target operation based on at least one predetermined instruction by using the digital assistant 120. As an example, a set of predetermined instructions may be pre-built. The terminal device 110 may generate a model input of the machine learning model 160-2 based on the prompt, the object mask, and the class label. The prompt may instruct the machine learning model 160-2 to analyze a relative position and an association relationship between the plurality of objects, predict a POI of the user for the image content based on the analysis result, and select one or more matching predetermined instructions from the set of predetermined instructions based on the analysis result. The terminal device 110 may perform the target operation based on one or more predetermined instructions in the model output.

In some embodiments, based on the object detection result, the terminal device 110 determines at least one predetermined posture formed by the guiding object with guidance in the at least one object. Thereafter, at least one predetermined instruction associated with at least one predetermined posture is determined from the plurality of candidate predetermined instructions. As an example, the mapping relationship between the predetermined instruction and the predetermined posture may be predetermined. For example, the predetermined instructions corresponding to the circling gesture 331 shown in FIG. 3C, the smearing gesture 341 shown in FIG. 3D, and the bounding gesture shown in FIG. 3E may be predetermined. When the at least one predetermined posture formed by the guiding object is determined, the terminal device 110 may determine the at least one predetermined instruction to which the at least one predetermined posture is mapped based on a mapping relationship between the predetermined instruction and the predetermined posture.

It may be understood that the target operation herein may include various operations that can be performed by the digital assistant 120. In some embodiments, the target operation may include a reply operation for a question of the user. Specifically, the terminal device 110 may generate a reply to the question posed by the user related to the target object. As an example, when the user points to the table lamp 301 through the gesture shown in FIG. 3A, the user may further pose a question through speech or text, for example, "What is this?" "What brand is this?" and the like. The terminal device 110 may generate a model input of the machine learning model 160-2 based on the prompt, the object mask, the class label, and the user question. The machine learning model 160-2 may also generate a reply to the user's question while determining that the POI is the table lamp 301. The terminal device 110 may present a reply or play a reply voice, for example, "this is a table lamp", "this is a table lamp of XXX brand", and the like.

In some embodiments, the digital assistant 120 may also control a target device classified as a POI to perform a target operation. Specifically, the terminal device 110 may determine, based on the object detection result, a target device associated with the digital assistant 120 and a control instruction indicating an interaction requirement for the target device from at least one object. Here, the target device associated with the digital assistant 120 may include a device for which the digital assistant 120 has control permissions, for example, the household appliances such as a television, an air conditioner, a refrigerator, a water heater, a desk lamp that bound to the digital assistant 120, or a wearable device such as earphones and glasses connected to the terminal device 120. The terminal device 110 may send a control instruction to the target device through the digital assistant 120, to instruct the target device to perform the target operation based on the control instruction.

As an example, when the user indicates the table lamp 301 through the gesture shown in FIG. 3A, the user may also send an instruction through speech or text, for example, "turn off", "lighten a bit", and the like. The terminal device 110 may provide the speech content or the text content of the user and the object detection result of the image content to the machine learning model 160-2, determine that the POI is the table lamp 301 through the machine learning model 160-2, and obtain the "turn-off instruction" or the "brightness adjustment instruction" generated by the machine learning model 160-2. The digital assistant 120 may send a "turn-off instruction" or a "brightness adjustment instruction" to the table lamp 301 based on the communication connection between the terminal device 110 and the table lamp 301, to turn off the table lamp 301 or adjust the brightness of the table lamp 301.

In this way, the embodiments of the present disclosure can accurately recognize the POI of the user on the image content, accurately determine the interaction requirement of the user for the POI, respond to the interaction request of the user based on the interaction requirement, and can improve the accuracy and interaction quality of human-computer interaction based on the image.

### Example Apparatus and Device

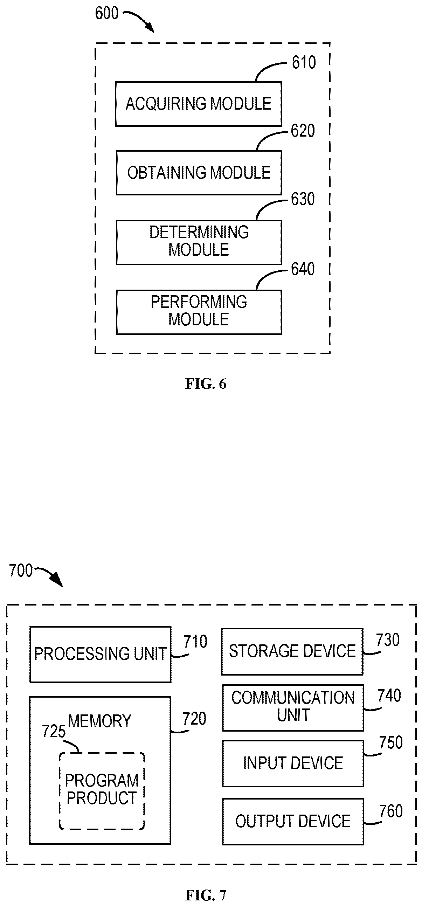

The embodiments of the present disclosure further provide a corresponding apparatus for implementing the above method or process. FIG. 6 shows a schematic structural block diagram of an example apparatus 600 for interaction according to some embodiments of the present disclosure. The apparatus 600 may be implemented as or included in the terminal device 110. The various modules/components in the apparatus 600 may be implemented by hardware, software, firmware, or any combination thereof.

As shown in FIG. 6, the apparatus 600 includes an acquiring module 610, an obtaining module 620, a determining module 630, and a performing module 640. The acquiring module 610 is configured to acquire, in response to receiving an interaction request from a user, interaction content comprising at least image content through a content acquisition device. The obtaining module 620 is configured to perform object detection on the image content to obtain an object detection result, wherein the object detection result indicates at least one object in the image content. The determining module 630 is configured to determine, based on the object detection result, a target object classified as a point of interest from the at least one object and an interaction requirement for the target object. The performing module 640 is configured to perform a target operation related to the target object based on the interaction requirement.

In some embodiments, the object detection result comprises at least one of: a position of the at least one object in the image content, or a class of the at least one object.

In some embodiments, the at least one object comprises a plurality of objects, and the determining module 630 is further configured to: determine a guiding object with guidance from the plurality of objects based on the object detection result; and determine, from the plurality of objects, an object indicated by the guiding object as the target object.

In some embodiments, the determining module 630 is further configured to: determine, based on the object detection result, at least one predetermined posture formed by the guiding object; and determine an object of the plurality of objects that is associated with the at least one predetermined posture as the target object.

In some embodiments, the determining module 630 is further configured to: determine a gaze region gazed by the user in the image content; and determine the target object based on one or more objects located in the gaze region.

In some embodiments, the interaction content further comprises speech content and/or text content of the user, and wherein the determining module is further configured to: determine, based on the object detection result, the target object associated with the speech content and/or the text content from the at least one object and the interaction requirement for the target object.

In some embodiments, the obtaining module 620 is further configured to: generate a first model input for a first machine learning model based at least on the image content; and obtain the object detection result based on a first model output determined by the first machine learning model for the first model input.

In some embodiments, the obtaining module 620 is further configured to: generate the first model input based on the image content and auxiliary prompt information for the image content.

In some embodiments, the obtaining module 620 is further configured to: detect a predetermined posture formed by a guiding object with guidance from the image content; generate, in response to the detected predetermined gesture being a static gesture, the first model input based on a static image in the image content; and generate, in response to the detected predetermined gesture being a dynamic gesture, the first model input based on a dynamic image in the image content.

In some embodiments, the determining module 630 is further configured to: generate a second model input for a second machine learning model based on the object detection result; and determine the target object and the interaction requirement based on a second model output by the second machine learning model for the second model input.

In some embodiments, the determining module 630 is further configured to: determine at least one predetermined instruction indicating the interaction requirement, and the performing module 640 is further configured to: perform the target operation based on the at least one predetermined instruction.

In some embodiments, the determining module 630 is further configured to: determine, based on the object detection result, at least one predetermined posture formed by a guiding object with guidance in the at least one object; and determine the at least one predetermined instruction associated with the at least one predetermined posture from a plurality of candidate predetermined instructions.

In some embodiments, the determining module 630 is further configured to: determine, based on the object detection result, a target device and a control instruction indicating an interaction requirement for the target device from the at least one object, and the performing module 640 is further configured to: send the control instruction to the target device, to instruct the target device to perform the target operation based on the control instruction.

The units and/or modules included in the apparatus 600 may be implemented in various manners, including software, hardware, firmware, or any combination thereof. In some embodiments, one or more units and/or modules may be implemented using software and/or firmware, such as machine-executable instructions stored on a storage medium. In addition to or as an alternative to machine-executable instructions, some or all of the units and/or modules in the apparatus 600 may be implemented, at least in part, by one or more hardware logic components. By way of example and not limitation, illustrative types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

FIG. 7 shows a block diagram illustrating an electronic device 700 in which one or more embodiments of the present disclosure may be implemented. It should be understood that the electronic device 700 illustrated in FIG. 7 is merely illustrative and should not constitute any limitation on the functionality and scope of the embodiments described herein. The electronic device 700 shown in FIG. 7 may be configured to implement the electronic device 110 in FIG. 1, or the apparatus 600 in FIG. 6.

As shown in FIG. 7, the electronic device 700 is in the form of a general-purpose electronic device. The components of the electronic device 700 may include, but are not limited to, one or more processors or processing units 710, a memory 720, a storage device 730, one or more communication units 740, one or more input devices 750, and one or more output devices 760. The processing unit 710 may be a physical or virtual processor and capable of performing various processes according to programs stored in the memory 720. In multiprocessor systems, multiple processing units execute computer-executable instructions in parallel to improve parallel processing capabilities of electronic device 700.

The electronic device 700 typically includes a plurality of computer storage media. Such media may be any available media accessible to the electronic device 700, including, but not limited to, volatile and non-volatile media, removable and non-removable media. The memory 720 may be volatile memory (e.g., registers, caches, random access memory (RAM)), non-volatile memory (e.g., read-only memory (ROM), electrically erasable programmable read-only memory (EEPROM), flash memory), or some combination thereof. The storage device 730 may be a removable or non-removable medium and may include a machine-readable medium, such as a flash drive, magnetic disk, or any other medium, which may be capable of storing information and/or data and may be accessed within electronic device 700.

The electronic device 700 may further include additional removable/non-removable, volatile/non-volatile storage media. Although not shown in FIG. 7, a disk drive for reading from or writing into a removable, nonvolatile magnetic disk (e.g., a "floppy disk") and an optical disk drive for reading from or writing into a removable, nonvolatile optical disk may be provided. In these cases, each drive may be connected to a bus (not shown) by one or more data media interfaces. The memory 720 may include a computer program product 725 having one or more program modules configured to perform various methods or actions of various embodiments of the present disclosure.

The communication unit 740 communicates with another electronic device through a communication medium. Additionally, the functionalities of components of the electronic device 700 may be implemented in a single computing cluster or multiple computing machines capable of communicating over a communication connection. Thus, the electronic device 700 may operate in a networked environment using logical connections with one or more other servers, network personal computers (PCs), or another network node.

The input device 750 may be one or more input devices, such as a mouse, a keyboard, a trackball, or the like. The output device 760 may be one or more output devices, such as a display, a speaker, a printer, or the like. The electronic device 700 may also communicate with one or more external devices (not shown) through the communication unit 740 as needed, such as storage devices, display devices, etc., may communicate with one or more devices that enable a user to interact with the electronic device 700, or may communicate with any device (e.g., a network card, a modem, etc.) that enables the electronic device 700 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided. The computer program product is tangibly stored on a non-transitory computer-readable medium and includes computer-executable instructions that, when executed by a processor, implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram(s).

The computer-readable program instructions may be loaded onto a computer, other programmable data processing apparatus, or other device, such that a series of operational steps are performed on a computer, other programmable data processing apparatus, or other device to produce a computer-implemented process. In such a way, the instructions executed on a computer, other programmable data processing apparatus, or other device implement the functions/acts specified in one or more blocks in the flowchart and/or block diagram.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method of interaction, comprising:
acquiring (210), in response to receiving an interaction request from a user, interaction content comprising at least image content through a content acquisition device;
performing (220) object detection on the image content to obtain an object detection result indicating at least one object in the image content;
determining (230), based on the object detection result, a target object classified as a point of interest from the at least one object and an interaction requirement for the target object; and
performing (240) a target operation related to the target object based on the interaction requirement.

2. The method of claim 1, wherein the object detection result comprises at least one of: a position of the at least one object in the image content, or a class of the at least one object.

3. The method of claim 1, wherein the at least one object comprises a plurality of objects, and wherein determining (230) the target object from the at least one object comprises:
determining a guiding object with guidance from the plurality of objects based on the object detection result; and
determining, from the plurality of objects, an object indicated by the guiding object as the target object.

4. The method of claim 3, wherein determining the object indicated by the guiding object from the at least one object as the target object comprises:
determining, based on the object detection result, at least one predetermined posture formed by the guiding object; and
determining an object of the plurality of objects that is associated with the at least one predetermined posture as the target object.

5. The method of claim 1, wherein determining (230) the target object from the at least one object comprises:
determining a gaze region gazed by the user in the image content; and
determining the target object based on one or more objects located in the gaze region.

6. The method of claim 1, wherein the interaction content further comprises speech content and/or text content of the user, and wherein determining (230) the target object and the interaction requirement for the target object comprises:
determining, based on the object detection result, the target object associated with the speech content and/or the text content from the at least one object and the interaction requirement for the target object.

7. The method of claim 1, wherein performing (220) the object detection on the image content to obtain the object detection result comprises:
generating a first model input for a first machine learning model based at least on the image content; and
obtaining the object detection result based on a first model output determined by the first machine learning model for the first model input.

8. The method of claim 7, wherein generating the first model input for the first machine learning model comprises:
generating the first model input based on the image content and auxiliary prompt information for the image content; or
generating the first model input for the first machine learning model comprises:
detecting (510) a predetermined posture formed by a guiding object with guidance from the image content;
generating (520), in response to the detected predetermined gesture being a static gesture, the first model input based on a static image in the image content; and
generating (530), in response to the detected predetermined gesture being a dynamic gesture, the first model input based on a dynamic image in the image content.

9. The method of claim 1, wherein determining (240) the target object from the at least one object and the interaction requirement for the target object comprises:
generating a second model input for a second machine learning model based on the object detection result; and
determining the target object and the interaction requirement based on a second model output by the second machine learning model for the second model input.

10. The method of claim 1, wherein determining the interaction requirement for the target object comprises:
determining at least one predetermined instruction indicating the interaction requirement, and
wherein performing the target operation comprises:
performing the target operation based on the at least one predetermined instruction;
wherein determining at least one predetermined instruction indicating the interaction requirement comprises:
determining, based on the object detection result, at least one predetermined posture formed by a guiding object with guidance in the at least one object; and
determining the at least one predetermined instruction associated with the at least one predetermined posture from a plurality of candidate predetermined instructions.

11. The method of claim 1, wherein determining (230) the target object and the interaction requirement for the target object comprises:
determining, based on the object detection result, a target device and a control instruction indicating an interaction requirement for the target device from the at least one object, and
wherein performing the target operation comprises:
sending the control instruction to the target device, to instruct the target device to perform the target operation based on the control instruction.

12. An apparatus for interaction, comprising:
an acquiring module (610) configured to acquire, in response to receiving an interaction request from a user, interaction content comprising at least image content through a content acquisition device;
an obtaining module (620) configured to perform object detection on the image content to obtain an object detection result, the object detection result indicating at least one object in the image content;
a determining module (630) configured to determine, based on the object detection result, a target object classified as a point of interest from the at least one object and an interaction requirement for the target object; and
a performing module (630) configured to perform a target operation related to the target object based on the interaction requirement.

13. An electronic device, comprising:
at least one processor; and
at least one memory coupled to the at least one processor and storing instructions for execution by the at least one processor, the instructions, when executed by the at least oneprocessor, causing the electronic device to perform the method of any of claims 1 to 11.

14. A computer-readable storage medium having stored thereon a computer program executable by a processor to implement the method of any of claims 1 to 11.

15. A computer program product comprising a computer program, wherein the computer program, when executed by a processor, implements the method of any of claims 1 to 11.
